# EUROPÄISCHE PATENTANMELDUNG

(11) **EP 4 560 163 A1**
(43) Veröffentlichungstag der Anmeldung: **28.05.2025**
(21) Anmeldenummer: 24198325.3
(22) Anmeldetag: 04.09.2024
(51) Int. Cl.: F16D 65/08, F16D 66/02, F16D 69/04

(54) **BREMSBELAG FÜR EINE FAHRZEUG-TROMMELBREMSE**

(30) Priorität: 21.11.2023 DE 102023132458
(71) Anmelder: BPW Bergische Achsen Kommanditgesellschaft, 51674 Wiehl (DE)
(72) Erfinder: Köchl, Ulrich, 51674 Wiehl (DE); Pehle, Michael, 51674 Wiehl (DE); Bethge, Manuel, 51545 Waldbröl (DE); Borlinghaus, Thomas, 51709 Marienheide (DE)
(74) Vertreter: DREISS Patentanwälte PartG mbB

(57) **Zusammenfassung**

Bremsbelag (30) für eine Fahrzeug-Trommelbremse (10) mit einem radial gekrümmten Belagträger (32) und einem auf dessen radial gekrümmten Außenseite (34) vorgesehenen Reibbelag (36), wobei der Belagträger (32) auf der Außenseite (34) mit einem radialen Vorsprung (70) versehen ist, und wobei der Reibbelag (36) mit einer mit dem Vorsprung (70) korrespondierenden Ausnehmung (85) versehen ist. Der Vorsprung (70) weist eine Sensoröffnung (80) zur Aufnahme eines Verschleißsensors (40) auf.

## Beschreibung

Die vorliegende Erfindung betrifft einen Bremsbelag für eine Fahrzeug-Trommelbremse mit einem radial gekrümmten Belagträger und einem auf dessen radial gekrümmten Außenseite vorgesehenen Reibbelag, wobei der Belagträger auf der Außenseite mit einem radialen Vorsprung versehen ist, und wobei der Reibbelag mit einer mit dem Vorsprung korrespondierenden Ausnehmung versehen ist. Weiter betrifft die Erfindung eine Sensoranordnung mit einem Bremsbelag und ein Set für die Sensoranordnung.

Die EP 1 748 211 B1 zeigt eine Bremsbacke für eine Fahrzeug-Trommelbremse, bei der die Reibbeläge gegen eine falsche Einbaulage beispielsweise mittels eines radial aus dem Belagträger hervorspringenden Vorsprung geschützt sind.

Verschleißsensoren in einer Fahrzeug-Trommelbremse sind wichtige Komponenten, die dazu dienen, den Zustand der Bremsbeläge zu überwachen. Sie können Probleme und Verschleiß frühzeitig erkennen, was die Sicherheit im Straßenverkehr erhöht. Allerdings können auch Verschleißsensoren selbst sowie deren Anordnung und Montage zu Problemen führen, die sich auf ihre Zuverlässigkeit und Leistung auswirken.

Häufig sind in einer Fahrzeug-Trommelbremse mehr als ein Bremsbelag vorgesehen, üblicherweise sind bei LKWs 2 Bremsbeläge in jeder Trommelbremse angeordnet. Jede Fahrzeugachse weist auf der Fahrzeugaußenseite ein Fahrzeugrad auf, das sich um die Rotationsachse der Fahrzeugachse dreht. Hinter dem Fahrzeugrad, beziehungsweise Fahrzeuginnen, ist je Seite eine Trommel der Trommelbremse angeordnet, die sich ebenfalls um die Rotationsachse dreht.

Innerhalb eines durch die Trommel zumindest abschnittsweise eingeschlossenen Raum sind die Bremsbeläge und eine Betätigung angeordnet. Durch die Betätigung werden die Beläge die durch eine Kraft beaufschlagt und wirken radial von innen gegen die um die Rotationsachse drehende Trommel. Die Bremsbeläge sind dabei ortsfest, also nicht drehbar um die Rotationsachse gelagert. Durch den Reibkontakt zwischen Trommel und den Reibbelägen der Bremsbeläge wird die Bremskraft für die Bremsung bereitgestellt. Bei einer Bremsung entstehen hohe Temperaturen und aggressiver Bremsstaub durch Abrieb in dem Raum in der Trommel.

Die Reibbeläge nutzen sich über die Zeit ab und müssen bei Verschleiß rechtzeitig getauscht werden, um ihre sichere Funktion gewährleisten. Da der Raum nicht nur durch die Trommel begrenzt wird, sondern meist auch durch ein Ankerblech auf der Fahrzeuginnenseite, ist dieser schwer zugänglich und meist nicht einsehbar.

Um dennoch den auftretenden Verschleiß des Reibbelags sicher erkennen zu können, kommen Verschleißsensoren zum Einsatz. Sie sollen einer gewissen Verschleißgrenze der Reibbeläge detektieren, dass die Reibbeläge oder auch der ganze Bremsbelag gewechselt werden sollte. Diese Verschleißsensoren können wie in der EP 0 307 634 A1 gezeigt dicht an den Reibbelägen sitzen und sind dort über ihre gesamte Lebensdauer den angesprochen widrigen Bedingungen ausgesetzt. Hinzu kommen mechanische Einwirkungen wie Vibration, Stöße und Schläge während das Fahrzeug in Bewegung ist. Die Ausfallsicherheit eines Verschleißsensors ist zu gewährleisten und ist mit hohen Anforderungen verbunden. Oft fallen die Verschleißsensoren innerhalb einer Trommelbremse auch frühzeitig aus.

Verschleißsensoren werden auch oft außerhalb einer Fahrzeug-Trommelbremse, und insbesondere im Bereich des Betätigungsmechanismus vorgesehen, um eine sichere Montage und Befestigung ohne innerhalb der Trommel vorkommende Temperatureinflüsse oder Bremsstaub zu ermöglichen.

Die Aufgabe der vorliegenden Erfindung ist es die Zuverlässigkeit von Verschleißsensoren in einer Fahrzeug-Trommelbremse zu verbessern.

Die Aufgabe wird gelöst mit einem Bremsbelag für eine Fahrzeug-Trommelbremse nach Anspruch 1. Der Bremsbelag umfasst eine radial gekrümmten Belagträger und einen auf dessen radial gekrümmter Außenseite befestigten Reibbelag, wobei der Belagträger auf seiner Außenseite mit einem radialen Vorsprung versehen ist. Der Reibbelag ist mit einer mit dem Vorsprung korrespondierenden Ausnehmung versehen. Der Vorsprung weist eine Sensoröffnung zur Aufnahme eines Verschleißsensors auf.

Es hat sich herausgestellt, dass der Ort dieses Vorsprunges für das Platzieren eines Sensors geeignet ist, ohne auf die Vorrichtung zur Vorgabe der richtigen Einbaulage der Reibbeläge verzichten zu müssen. Dazu muss weiter auch keine zusätzliche Aussparung im Reibbelag für den Verschleißsensor vorgesehen sein. Dadurch wird die mit der Trommel wirkende Reibbelagfläche vergrößert, was der Bremsleistung der Trommelbremse zugutekommt.

Durch einen erfindungsgemäßen Bremsbelag mit einer derartigen Sensoröffnung kann ein Verschleißsensor bestmöglich an einem Bremsbelag und damit innerhalb einer Trommelbremse angeordnet werden. Durch die Positionierung des Verschleißsensors auf dem Vorsprung mittels der Sensoröffnung kann je nach Einbaulage Staunässe und Ablagerung von Bremsstaub vermieden werden.

Weiter ist durch die Sensoröffnung eine ideale und positionsgenaue Aufnahme für den Sensor bereitgestellt. Dadurch wird eine bewegungseinschränkende oder weitestgehend ortsfeste Befestigung in axialer sowie tangentialer Richtung ermöglicht. Der Verschleißsensor kann sich bei mechanischen Einflüssen besser abstützen und seine genaue Position am Bremsträger wird über seine Lebensdauer besser gewährleistet. Ferner ist der Verschleißsensor weniger Vibrationen und damit verbundenen Schlägen gegen den Belagträger ausgesetzt, einfach ausgedrückt der Verschleißsensor klappert nicht oder nur geringfügig.

Der Vorsprung weist vorzugsweise eine in einer überwiegend flachen Ebene liegende Sensorfläche zur Anlage eines Verschleißsensors auf. In diesem Zusammenhang soll zwischen flachen und gekrümmten Ebenen und Räumen unterschieden werden. Ein Blatt Papier auf einem geraden Tisch etwa ist eine flache Ebene. Die Oberfläche eines Globus hingegen ist eine gekrümmte Ebene. Die flache Ebene im Sinne der vorliegenden Erfindung ist demnach nicht oder nur unwesentlich gekrümmt. Die oben genannten Vorteile der Sensoröffnung gelten auch für die Sensorfläche und insbesondere für Kombinationen aus Sensorfläche und Sensoröffnung.

Ein weiterer Vorteil ist, wenn die Sensorfläche auf dem Vorsprung vorgesehen ist, dass eine Verschleißgrenze ab der der Verschleißsensor das Erreichen der gewissen verbleibenden Reibbelagdicke anzeigt über einen Abstand der Sensorfläche von der Außenseite einstellbar ist. Bei einem größeren Abstand wird Beispielsweise ein Verschleißsensor mit Durschleifdraht früher warnen und der Austausch der Beläge mit größeren Vorlauf geplant werden.

Weiter ist durch die Sensorfläche in der flachen Ebene eine ideale und positionsgenaue Anlagefläche für den Sensor bereitgestellt. Dadurch wird eine bewegungseinschränkende oder weitestgehend ortsfeste Befestigung in radialer Richtung ermöglicht. Der Verschleißsensor kann sich bei mechanischen Einflüssen besser abstützen. Ferner ist der Verschleißsensor weniger Vibrationen und damit verbundenen Schlägen gegen den Belagträger ausgesetzt, einfach ausgedrückt der Verschleißsensor klappert nicht oder nur geringfügig.

Vorzugsweise weist der Vorsprung eine Vorspungaußenseite auf, wobei die Sensorfläche gegenüber der Vorspungaußenseite zurückversetzt ist. Die Vorspungaußenseite ist dabei radial von der Außenseite weg gerichtet. Die Sensorfläche ist demnach in einer Ebene angeordnet, die vorzugsweise zwischen der Vorsprungaußenseite und der Außenseite des Belagträgers liegt.

Vorteilhafterweise ist die Sensorfläche derart zurückversetzt, dass die Sensorfläche zumindest abschnittsweise und vorzugsweise vollständig von einem Bund umgeben ist. Dieser Bund ist vorzugsweise ein Ringbund, der die Sensorfläche umgibt. Abschnittsweise kann der Bund auch als eine Nase zur Anlage des Verschleißsensors ausgebildet sein. Weiter ist es denkbar, dass der Bund eine Anlage für den Verschleißsensor senkrecht zur Sensorfläche bereitstellt. Der Bund kann dabei einen erweiterten Schutz des Sensors vor den bereits diskutierten Einflüssen bieten.

Es ist denkbar die Sensoröffnung in der Sensorfläche vorzusehen. Vorteilhafterweise verläuft die Sensoröffnung entlang einer Achse und die Sensorfläche erstreckt sich senkrecht zu der Achse der Sensoröffnung. Die Sensoröffnung kann eine Bohrung, ein Durchtrittsloch, gestanzt oder als Sackloch ausgebildet sein. Die Sensoröffnung ermöglicht es den Sensor besser am Bremsbelag anzuordnen und sicher zu montieren.

Vorteilhaft ist, wenn die Sensorfläche wenigstens weitgehend parallel zu einer tangential an der Außenseite anliegenden Ebene des Belagträgers verläuft. Dadurch wird eine vorteilhafte Positionierung des Verschleißsensors ermöglicht, sodass dieser in radialer Richtung zu der Reibbelagaußenfläche gerichtet ist.

Der Vorsprung weist vorteilhafterweise eine Vorsprungdicke auf, die sich von der Vorsprungaußenseite bis zu einer Vorsprunginnenseite erstreckt, wobei der Belagträger eine Belagträgerdicke aufweist, die sich von seiner Außenseite bis zu seiner Innenseite erstreckt und wobei die Vorsprungdicke wenigstens weitgehend der Belagträgerdicke entspricht. Mit diesen Dickenverhältnissen von Vorsprungdicke zu Belagträgerdicke kann eine hohe Stabilität des Belagträgers gewährleistet werden und die Sicherheit des Bremsbelags wird durch den Vorsprung nicht beeinträchtigt.

Es ist denkbar, dass der Bremsbelag auf der Innenseite des Belagträgers eine mit dem Vorsprung korrespondierende Vertiefung ausbildet. Dies hat den Vorteil, dass eine Materialhäufung im Bereich des Vorsprungs vermieden wird und damit einhergehende ungewollte Belastungen durch temperaturbedingte Ausdehnungen.

Vorteilhaft ist, wenn der Vorsprung durch Umformen des Belagträgers am Belagträger angeformt ist. Der Umformprozess kann insbesondere Ausstellen, Pressen oder Schmieden sein.

Weiter vorteilhaft ist, wenn die Sensorfläche durch spanabhebendes Bearbeiten bereitgestellt ist. Das Bearbeiten erfolgt insbesondere nach dem Anformen des Vorsprungs durch oben genannte Umformprozesse.

Es ist denkbar, dass der Vorsprung durch Prägen und anschließend die Sensorfläche durch Kalibrieren bereitgestellt ist. Unter Prägen versteht man allgemein auch die oben genannten Umformprozesse. Das Kalibrieren, auch Nachprägen genannt, wird an einer oder mehreren Flächen vorgenommen, um eine höhere Maßgenauigkeit, eine bessere Oberflächengüte, eine größere Formgenauigkeit oder eine höhere Lagegenauigkeit zu erzielen. Dadurch ergibt sich eine vorteilhafte Fertigung des Belagträgers.

Vorteilhaft ist, wenn der Reibbelag keilförmig ausgebildet ist und in zwei voneinander getrennte Segmente unterteilt ist, wobei sich die Segmente im Bereich des Vorsprungs beabstandet gegenüberstehen, und der Reibbelag im Bereich des Vorsprungs eine größte radiale Dicke aufweist. Hierbei kann der Vorpsung eine sichere und richtige Montage der Segmente auf dem Belagträger sicherstellen.

Die der Erfindung zugrundeliegende Aufgabe wird auch gelöst durch eine Sensoranordnung nach Anspruch 14. Die Sensoranordnung umfasst einen erfindungsgemäßen Bremsbelag, einen Verschleißsensor, eine Scheibe und ein Befestigungsmittel zur Bereitstellung von Federkraft. Der Verschleißsensor weist einen Sensorkopf und einen Befestigungsabschnitt auf. Der Verschleißsensor ist mit seinem Befestigungsabschnitt radial von außen in die Sensoröffnung eingeführt, sodass der Sensorkopf mit einer Unterseite auf der Sensorfläche aufliegt. Die Scheibe umschließt den Befestigungsabschnitt und liegt auf der Innenseite des Belagträgers an. Vorteilhafterweise liegt die Scheibe die Vertiefung überdeckend auf der Innenseite an. Das Befestigungsmittel wirkt mit dem Befestigungsabschnitt so zusammen und liegt so auf der Scheibe auf, dass der Verschleißsensor mit Federkraft in gegen die Sensorfläche gehalten wird. Das Befestigungsmittel wirkt dabei vorzugsweise formschlüssig in radialer Richtung mit dem Befestigungsabschnitt zusammen.

Vorteilhafterweise weist das Befestigungsmittel einen U-förmigen und flachen Grundkörper auf, wobei von diesem wenigstens ein Federarm absteht. Es ist denkbar, dass das Befestigungsmittel einstückig als Biegeteil ausgebildet ist. Vorteilhaft ist, wenn das Befestigungsmittel einen Griff oder einen Werkzeugabschnitt für eine verbesserte Handhabbarkeit aufweist.

Durch eine derartige Sensoranordnung kann eine sichere Verschleißsensierung des Reibbelagverschleißes gewährleistet werden.

Die der Erfindung zugrundeliegende Aufgabe wird auch gelöst durch ein Set für eine erfindungsgemäße Sensoranordnung gemäß Anspruch 15. Dieses Set umfasst wenigstens einen Verschleißsensor, wenigstens eine Scheibe, wenigstens ein Befestigungsmittel und wenigstens einen erfindungsgemäßen Bremsbelag.

Weitere Einzelheiten und vorteilhafte Ausgestaltungen der Erfindung sind der nachfolgenden Beschreibung zu entnehmen, anhand derer Ausführungsbeispiele der Erfindung näher beschrieben und erläutert sind.

Es zeigen:
- Figur 1:: Eine Fahrzeug-Trommelbremse an einer Fahrzeugachse;
- Figur 2:: eine Explosionsansicht eines Bremsbelags für eine Fahrzeug-Trommelbremse gemäß Fig. 1 mit einem Verschleißsensor;
- Figur 3:: den Verschleißsensor gemäß Fig.2;
- Figur 4:: eine Detailansicht auf einen Vorsprung auf einem Belagträger des Bremsbelags gemäß Fig. 2; und
- Figur 5:: eine Schnittansicht entlang einer Rotationsachse durch den Bremsbelag gemäß Fig. 2.

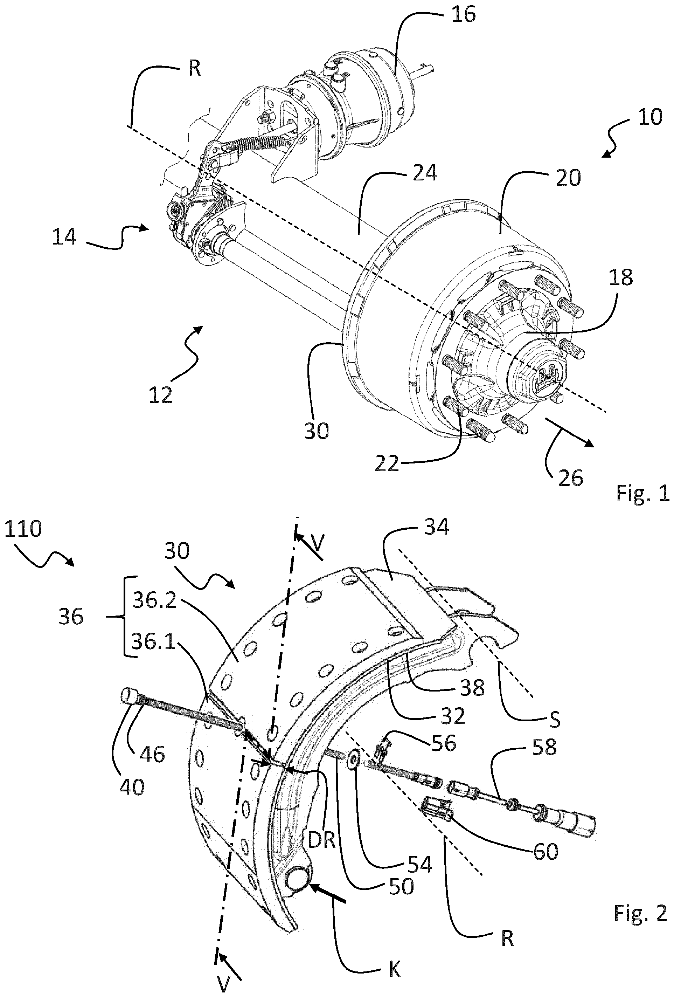

In der Figur 1 ist eine Fahrzeug-Trommelbremse 10, im folgenden Trommelbremse genannt, an einer Fahrzeugachse 12 sowie eine Betätigungsmechanik 14 und ein Bremszylinder 16 gezeigt. Die Fahrzeugachse 12 kann mittels nicht gezeigter Fahrwerkskomponenten an ein nicht gezeigtes Fahrzeugchassis montiert werden. Die Trommelbremse 10 weist eine mit einer Radnabe 18 drehbare Trommel 20 auf. Die Trommel 20 ist an der Radnabe 18 mittels mehreren Radbolzen 22 befestigt. Die Trommel 20 und die Radnabe 18 sind um eine Rotationsachse R, die einer Erstreckungsrichtung des Achskörpers 24 entspricht, drehbar gelagert. Ein nicht gezeigtes Fahrzeugrad, bestehend aus Reifen und Felge, kann Fahrzeugaußen mittels der Radbolzen 22 auf der Baugruppe aus Trommel 20 und Radnabe 18 montiert werden. Fahrzeugaußen ist in Fig. 1 in Richtung rechts entsprechend des Pfeils 26 entlang der Rotationsachse R zu sehen.

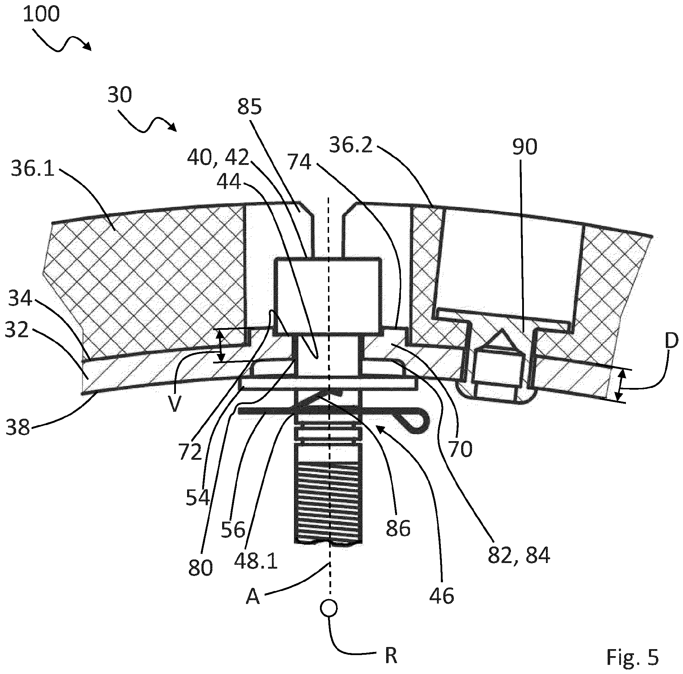

Die Trommelbremse 10 erstreckt sich radial um die Rotationsachse R. Innerhalb der Trommel 20, also radial in Richtung der Rotationsachse R, ist wenigstens ein Bremsbelag 30 ortsfest angeordnet. Der Bremsbelag 30 ist in den nachfolgenden Figuren 2 und 5 gezeigt. Ortsfest im Zusammenhang mit dem Bremsbelag 30 so zu verstehen, dass dieser nicht um die Rotationsachse R drehbar ist.

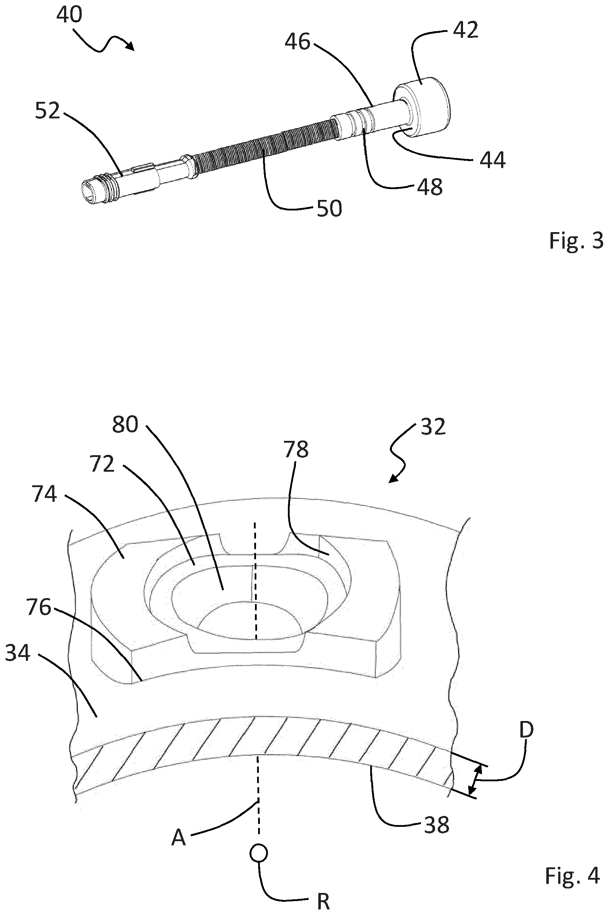

Der Bremsbelag 30, siehe Figur 2, weist einen radial um die Rotationsachse R gekrümmten Belagträger 32 und einen auf dessen radial gekrümmter Außenseite 34 befestigten keilförmigen Reibbelag 36 auf. Der Reibbelag 36 ist in zwei Segmente 36.1, 36.2 unterteilt, wobei die hohen Keilkanten der zwei Segmenten 36.1, 36.2 sich gegenüberstehen. Dort weist der Reibbelag 36 seine größte radiale Dicke DR auf. Es kann auch nur ein großes einteiliges Segment oder mehr als zwei Segmente vorgesehen sein, dies ist jedoch nicht gezeigt. Der Belagträger 32 weist radial nach innen eine Innenseite 38 auf. Zwischen der Außenseite 34 und der Innenseite 38 weist der Belagträger eine Belagträgerdicke D auf, die in der Figur 4 gezeigt ist.

Der Bremsbelag 30 wird im Falle einer Bremsung über die Betätigungsmechanik 14, die sich bis in das Innere der Trommel 20 fortsetzt, mit einer Bremskraft K beaufschlagt. Der Bremsbelag 30 ist über maulförmige Öffnungen am Ende seiner zwei auf dem Belagträger 32 fest verbundenen Stege gegen nicht gezeigte Wiederlager um eine Schwenkachse S schwenkbar gelagert. Durch die Bremskraft K wird der Bremsbelag mit seinem Reibbelag um die Schwenkachse S geschwenkt und von radial innen gegen die Trommel 20 gedrängt. Durch die dadurch auftretende Reibung wird die sich um die Rotationsachse R drehende Radnabe 18, die Trommel 20 und das nicht gezeigte Fahrzeugrad abgebremst. Dies hat auch zur Folge, dass zum einen Wärme generiert wird und zum anderen sich der Reibbelag 36 abnutzt.

Um eine Abnutzung des Reibbelags 36 zu detektieren, ist ein Verschleißsensor 40 vorgesehen, der in den nachfolgenden Figuren 3 und 5 im Detail gezeigt ist.

Beim Verschleißsensor 40 handelt es sich vorzugsweise um einen elektrischen Sensor mit Durschleifdraht. Dieser Durschleifdraht wird beim Erreichen einer gewissen Reibbelagdicke des Reibbelags 36 durch die drehende Trommel 20 durchgeschliffen. Durch den nun nicht mehr geschlossenen Stromkreis kann mit einer nicht gezeigten Anzeige- oder Auswerteeinheit signalisiert werden, dass die gewisse Reibbelagdicke unterschritten worden ist.

Der Verschleißsensor 40 kann auch andere Messprinzipien umfassen, wie beispielsweise eine mechanische Messung oder eine kontinuierliche Messung der Reibbelagdicke, dies ist jedoch nicht gezeigt.

Der Verschleißsensor 40 ist in Figur 3 im Detail gezeigt. Der Verschleißsensor 40 weist einen Sensorkopf 42 mit einer Unterseite 44 auf. An der Unterseite 44 schließt sich ein Befestigungsabschnitt 46 mit Nuten 48 an. Der Befestigungsabschnitt 46 umschließt eine Anschlussleitung 50, die sich bis zu einem Anschlussstecker 52 weiter fortsetzt. Die Anschlussleitung 50 ist zwischen dem Befestigungsabschnitt 46 und dem Anschlussstecker 52 mit einem Temperatur- und Knickschutz umgeben. Im Sensorkopf 42 ist der Durchschleifdraht enthalten, der, wie oben beschrieben, beim Unterscheiten einer gewissen Reibbelagdicke mit dem Sensorkopf 42 durchgeschliffen wird.

In Figur 2 sind weitere Komponenten zur Montage und Befestigung des Verschleißsensors 40 gezeigt. Diese Komponenten sind eine Scheibe 54, ein Befestigungsmittel 56 in Form einer Federklammer und ein Verlängerungskabel 58 mit einem Befestigungsclip 60, um das Anschlusskabel 50 und das Verlängerungskabel 58 gegenüber achsfesten Bauteilen zu fixieren. Das Anschlusskabel 50 ist hierbei zugunsten einer besseren Übersichtlichkeit unterbrochen dargestellt. Die explosionsartige Darstellung der Figur 2, insbesondere des Verschleißsensors 40 und der weiteren Komponenten 54, 56, 58, 60, kann als ein Zustand während der Montage des Verschleißsensors 40 in eine Einbauposition gesehen werden, die in Figur 5 gezeigt ist.

Ein auf der radial gekrümmten Außenseite 34 des Belagträgers 32 ausgebildeter Vorsprung 70 ist in der Figur 4 gezeigt. Der Verschleißsensor 40 liegt in seiner Einbauposition mit der Unterseite 44 des Sensorkopfes 42 auf einer an dem Vorsprung 70 ausgebildete Sensorfläche 72 auf, wie es in der Figur 5 gezeigt ist.

Zunächst sollen aber die Details des Vorsprungs 70 anhand der Figur 4 erläutert werden. Der Belagträger 32 ist geschnitten und perspektivisch dargestellt. Auf die Darstellung des Reibbelags 36 wurde verzichtet. Der Vorsprung 70 erhebt sich in radialer Richtung von der Rotationsachse R weg von der Außenseite 34 und weist neben der Sensorfläche 72 eine Vorsprungaußenseite 74 auf. Dieser Vorsprung verhindert auch eine Montage mit falscher Drehlage der Segmente 36.1 und 36.2 des Reibbelags 36 auf dem Belagträger 32 derart, dass sich die dicksten Keilkanten der Segmente 36.1 und 36.2 im Bereich der Mitte des Reibbelages 36 gering beabstandet gegenüberstehen. Der Vorsprung befindet sich in diesem Abstandsbereich und erstreckt sich von dort aus in die eigentliche Kontur der zwei Segmente hinein, welche dort jeweils einen korrespondierenden Rücksprung aufweisen. Der Vorsprung 70 kann allerdings auch an jeder anderen Stelle der Außenseite 34 des Reibbelages 36 platziert sein.

Die Sensorfläche 72 erstreckt sich in einer flachen Ebene, die im Vergleich zur Außenseite 34 keine Krümmung aufweist. Die Krümmung der Außenseite 34 ist an der Schnittkontur, sowie an der unterkante 76 des Vorsprungs 70 erkennbar. Die flache Ebene der Sensorfläche 72 erstreckt sich also parallel zur Rotationsachse R. Weiter ist die Sensorfläche 72 gegenüber der Vorsprungaußenseite 74 zurückversetzt. Die Sensorfläche 72 ist also in radialer Richtung im Bereich zwischen der Außenseite 34 und der Vorspungaußenseite 74 angeordnet. Die Vorsprungaußenseite 74 kann so wie die Außenseite 34 gekrümmt sein oder in einer parallel zur Sensorfläche 72 parallelen flachen Ebene. Denkbar ist auch, dass sich die Sensorfläche 72 über die gesamte Vorspungaußenseite 74 erstreckt, dies ist jedoch nicht gezeigt.

Der Vorsprung 70 kann jede beliebige Querschnittsform aufweisen. Durch eine längliche vorzugsweise ovale, sich in Umfangsrichtung des Reibbelages 36 erstreckende Querschnittsform, wie in Figur 4 gezeigt, lässt sich vorteilhaft eine Verhinderung einer Falschmontage beider Segmente 36.1, 36.2 mit nur einem Vorsprung unter möglichst wenig Volumenverlust an Reibmaterial erreichen.

Durch die zurückversetzte Lage ist die Sensorfläche 72 abschnittsweise von einem Bund 78 umgeben, der in der in Fig. 4 gezeigten Ausführungsform zwei getrennte Bundabschnitte umfasst. Der Bund kann auch so ausgebildet sein, dass er die Sensorfläche 72 allseitig umgibt. Der Bund 78 trägt zur Höhe des Vorsprunges und damit zur besseren Verhinderung einer Falschmontage der Segmente 36.1 und 36.2 auf dem Belagträger 32 bei. Der Sensorkopf 42 liefert zur Verhinderung einer Falschmontage keinen Beitrag, da dieser üblicherweise erst nach der Montage der Segmente 36.1 und 36.2 montiert wird. Der Bund 78 kann einen Innendurchmesser aufweisen, der einem Außendurchmesser des Sensorkopfes 42 nahezu entspricht. Dadurch entsteht ein Halten in Querrichtung des Sensorkopfes 42. Es sind auch nicht rotationssymmetrische Bauformen des Verschleißsensors denkbar, wobei auch dann die Kontur des Bundes der Kontur des Verschleißsensors entspricht.

In der Sensorfläche 72 ist eine Sensoröffnung 80 vorgesehen, die sich entlang einer Achse A erstreckt. Die Achse A erstreckt sich in radialer Richtung nahezu von der Rotationsachse R weg. Die Achse A kann die Rotationsachse R dabei schneiden oder nahe an dieser vorbeilaufen.

Die Achse A kann sich auch orthogonal zu einer Tangente der gekrümmten Außenseite 34 erstrecken.

Die Sensoröffnung 80 ist als Durchgangsloch durch den gesamten Belagträger 32 ausgebildet. Die Sensorfläche 72 verläuft bei der gezeigten Ausführungsform senkrecht zu der Achse A der Sensoröffnung 80.

Der Vorsprung 70 wird vorzugsweise durch Umformen des Belagträgers 32, insbesondere durch Prägen geformt. Die Sensorfläche 72 wird entweder anschließend durch Prägen und Kalibrieren bereitgestellt oder durch spanende Bearbeitung. Auch Kombinationen sind möglich. Die Sensoröffnung 80 kann bereits durch das Umformen bereitgestellt werden oder nachträglich durch Bohren oder im Falle eines Durchgangslochs gestanzt werden.

Figur 5 zeigt einen Ausschnitt aus einem Schnitt entlang der Schnittlinie V gemäß Figur 2 durch den Bremsbelag 30. Mit der Figur 5 sollen die Vorteile des Vorsprungs 70 mit der Sensorfläche 72 weiter erläutert werden. In dieser Ansicht ist zunächst eine Vertiefung 82 auf der Innenseite 38 des Belagträgers 32 gezeigt, die mit dem Vorsprung 70 korrespondiert. Der Vorsprung 70 ist vorzugsweise durch Prägen oder Ausstellen hergestellt. Der Boden dieser Vertiefung 82 ist in Bezug auf die Innenseite 38 radial nach außen versetzt und bildet eine Vorsprunginnenseite 84. Der Vorsprung 70 weist demnach eine Vorsprungdicke V zwischen seiner Vorsprunginnenseite 84 und seiner Vorspungaußenseite 74 auf. Die Vorsprungdicke V und die Belagträgerdicke D sind aufgrund des Prägens bzw. Ausstellens weitestgehend gleich.

Der Verschleißsensor 40 ist mit seinem Befestigungsabschnitt 46 in die Sensoröffnung 80 eingeführt. Wobei eine mit dem Vorsprung 70 korrespondierende Ausnehmung 85 im Reibbelag 36 vorgesehen ist, damit der Verschleißsensor 40 radial von außen eingeführt werden kann. Die Unterseite 42 des Sensorkopfes 40, die in der Einbauposition vorzugsweise parallel zur Sensorfläche 72 verlaufend ausgebildet ist, liegt in der Einbauposition auf der Sensorfläche 72 auf. Der Bund 78 umgibt den Sensorkopf 40 in tangentialer Richtung. Das Befestigungsmittel 56 wirkt mit dem Befestigungsabschnitt 46 zusammen, da es von der Seite her und formschlüssig in die oberste Nut 48.1 der drei Nuten 48 quer zur Achse A eingeschoben ist. Die Scheibe 54 umschließt den Befestigungsabschnitt 46 und liegt auf der Innenseite 38 des Belagträgers 32 auf. Weiter überdeckt die Scheibe 54 damit auch die Vertiefung 82 vorzugsweise vollständig.

Wie weiter aus Figur 5 deutlich wird, ist der Reibbelag 36 mittels Nieten 90 am Belagträger befestigt.

Das Befestigungsmittel 56 ist als Federelement ausgeführt und weist Federarme 86 auf, die sich in der gezeigten Einbauposition radial nach außen und in Richtung der Scheibe 54 erstrecken. Die Federarme 86 sind hierbei vorgespannt und liegen in axialer Richtung unter Federkraft auf der Scheibe 54 auf. Durch die Federkraft wird der Verschleißsensor 40 kraftschlüssig auf der Sensorfläche 72 gehalten. Dadurch ergibt sich in radialer Richtung R eine vorteilhafte Befestigung in Bezug auf Vibrationen und mechanische Einwirkung während einer Bremsung und im allgemeinen Betrieb einer Trommelbremse 10 mit einem derartigen Bremsbelag 30.

Durch die flache Sensorfläche 72 ergibt sich eine optimale Kraftverteilung auf die Unterseite 44 des Sensorkopfes 42 und damit eine sichere Positionierung des Verschleißsensors 40 am Belagträger 32. Ferner ist der zumindest teilweise umlaufende Bund vorteilhaft und schützt den Sensorkopf vor den genannten Einflüssen in der Trommelbremse.

Eine derartige wie in Figur 5 gezeigte Anordnung mit dem durch das Befestigungsmittel 56 und der Scheibe 54 am Bremsbelag 30 befestigten Verschleißsensor 40 ist eine Sensoranordnung 100.

Die in Figur 2 gezeigten Komponenten bilden ein Set 110 welches bei Wartungsarbeiten an einer Trommelbremse 10 benutzt werden kann.

### Bezugszeichenliste

- 10: Fahrzeug-Trommelbremse
- 12: Fahrzeugachse
- 14: Betätigungsmechanik
- 16: Bremszylinder
- 18: Radnabe
- 20: Trommel
- 22: Radbolzen
- 24: Achskörper
- 26: Pfeil - Richtung Fahrzeug Außen
- 30: Bremsbelag
- 32: Belagträger
- 34: Außenseite
- 36: Reibbelag
- 40: Verschleißsensor
- 42: Sensorkopf
- 44: Unterseite
- 46: Befestigungsabschnitt
- 48: Nuten
- 50: Anschlussleitung
- 52: Anschlusstecker
- 54: Scheibe
- 56: Befestigungsmittel
- 58: Verlängerungskabel
- 60: Befestigungsclip
- 70: Vorsprung
- 72: Sensorfläche
- 74: Vorspungaußenseite
- 76: Unterkante Vorsprung
- 78: Bund
- 80: Sensoröffnung
- 82: Vertiefung
- 84: Vorsprunginnenseite
- 85: Ausnehmung im Reibbelag
- 86: Federarme
- 90: Nieten
- 100: Sensoranordnung
- 110: Set
- R: Rotationsachse
- S: Schwenkachse
- A: Achse in Sensoröffnung
- D: Belagträgerdicke
- V: Vorsprungdicke
- DR: Größte radiale Dicke des Reibbelags

## Patentansprüche

1. Bremsbelag (30) für eine Fahrzeug-Trommelbremse (10) mit einem radial gekrümmten Belagträger (32) und einem auf dessen radial gekrümmten Außenseite (34) vorgesehenen Reibbelag (36), wobei der Belagträger (32) auf der Außenseite (34) mit einem radialen Vorsprung (70) versehen ist, und wobei der Reibbelag (36) mit einer mit dem Vorsprung (70) korrespondierenden Ausnehmung (85) versehen ist, **dadurch gekennzeichnet, dass** der Vorsprung (70) eine Sensoröffnung (80) zur Aufnahme eines Verschleißsensors (40) aufweist.

2. Bremsbelag (30) nach Anspruch 1, wobei der Vorsprung (70) eine in einer flachen Ebene liegende Sensorfläche (72) zur Anlage eines Verschleißsensors (40) aufweist.

3. Bremsbelag (30) nach einem der Ansprüche 1 oder 2, wobei der Vorsprung (70) eine Vorsprungaußenseite (74) aufweist, wobei die Sensorfläche (72) gegenüber der Vorsprungaußenseite (74) zurückversetzt ist.

4. Bremsbelag (30) nach einem der vorhergehenden Ansprüche, wobei die Sensorfläche (72) derart zurückversetzt ist, dass die Sensorfläche (72) zumindest abschnittsweise von einem Bund (78) umgeben ist.

5. Bremsbelag (30) nach einem der vorhergehenden Ansprüche, wobei die Sensoröffnung (80) in der Sensorfläche (72) vorgesehen ist.

6. Bremsbelag (30) nach Anspruch 5, wobei die Sensoröffnung (80) entlang einer Achse (A) erstreckt und die Sensorfläche (72) senkrecht zu der Achse (A) der Sensoröffnung (80) verläuft.

7. Bremsbelag (30) nach einem der vorherigen Ansprüche, wobei die Sensorfläche (72) wenigstens weitgehend parallel zu einer tangential an der Außenseite (34) anliegenden Ebene des Belagträgers (32) verläuft.

8. Bremsbelag (30) nach einem der vorherigen Ansprüche, wobei der Vorsprung (70) eine Vorsprungdicke (V) aufweist, die sich von der Vorsprungaußenseite (74) bis zu einer Vorsprunginnenseite (84) erstreckt, wobei der Belagträger (32) eine Belagträgerdicke (D) aufweist, die sich von seiner Außenseite (34) bis zu seiner Innenseite (38) erstreckt, und wobei die Vorsprungdicke (V) wenigstens weitgehend der Belagträgerdicke (D) entspricht.

9. Bremsbelag (30) nach einem der vorherigen Ansprüche, wobei auf der Innenseite (38) des Belagträgers eine mit dem Vorsprung (70) korrespondierende Vertiefung (82) ausgebildet ist.

10. Bremsbelag (30) nach einem der vorherigen Ansprüche, wobei der Vorsprung (70) durch Umformen des Belagträgers (32) am Belagträger (32) angeformt ist.

11. Bremsbelag (30) nach einem der vorherigen Ansprüche, wobei die Sensorfläche (72) durch spanabhebendes Bearbeiten bereitgestellt ist.

12. Bremsbelag (30) nach einem der vorherigen Ansprüche, wobei der Vorsprung (70) durch Prägen und anschließend die Sensorfläche (72) durch Kalibrieren bereitgestellt ist.

13. Bremsbelag (30) nach einem der vorherigen Ansprüche, wobei der Reibbelag (36) keilförmig ausgebildet ist und in zwei voneinander getrennte Segmente (36.1, 36.2) unterteilt ist, wobei sich die Segmente (36.1, 36.2) im Bereich des Vorsprungs (70) beabstandet gegenüberstehen, und der Reibbelag (36) im Bereich des Vorsprungs (70) eine größte radiale Dicke (DR) aufweist.

14. Sensoranordnung (100) mit einem Bremsbelag (30) nach einem der Ansprüche 1 bis 13,
mit einem Verschleißsensor (40),
mit einer Scheibe (54), und
mit einem Befestigungsmittel (56) zur Bereitstellung von Federkraft,
wobei der Verschleißsensor (40) einen Sensorkopf (42) und einen Befestigungsabschnitt (46) aufweist,
wobei der Verschleißsensor (40) mit seinem Befestigungsabschnitt (46) radial von außen in die Sensoröffnung (80) eingeführt ist, sodass der Sensorkopf (42) mit einer Unterseite (44) auf der Sensorfläche (72) aufliegt,
wobei die Scheibe (54) den Befestigungsabschnitt (46) umschließt und auf der Innenseite (38) anliegt, und wobei das Befestigungsmittel (56) mit dem Befestigungsabschnitt (46) so zusammen wirkt und so auf der Scheibe (54) aufliegt, dass der Sensor (40) mit Federkraft gegen die Sensorfläche (72) gehalten wird.

15. Set (110) für eine Sensoranordnung (100) nach Anspruch 14 umfassend wenigstens einen Verschleißsensor (40), wenigstens eine Scheibe (54), wenigstens ein Befestigungsmittel (56) und wenigstens seinen Bremsbelag (30) nach einem der Ansprüche 1 bis 13.
